# EUROPÄISCHE PATENTSCHRIFT

(11) **EP 3 497 760 B1**
(45) Veröffentlichungstag und Bekanntmachung des Hinweises auf die Patenterteilung: **06.01.2021**
(21) Anmeldenummer: 17740660.0
(22) Anmeldetag: 05.07.2017
(51) Int. Cl.: H02B 1/36, H02B 11/133

(54) **VERRIEGELUNG FÜR EIN ENERGIEMODUL**
LOCKING DEVICE FOR AN ENERGY MODULE
VERROUILLAGE POUR UN MODULE D'ÉNERGIE

(30) Priorität: 10.08.2016 DE 102016114801
(43) Veröffentlichungstag der Anmeldung: 19.06.2019
(73) Patentinhaber: Eaton Intelligent Power Limited, Dublin 4 (IE)
(72) Erfinder: BONA, Gerhard, 53177 Bonn (DE); RITSCHEL, Norbert, 40627 Düsseldorf (DE); SCHMIDT, Rainer, 53757 Sankt Augustin (DE); GEGENBAUER, Bernhard, 1210 Wien (AT)
(74) Vertreter: Eaton IP Group EMEA
(86) Internationale Anmeldenummer: PCT/EP2017/066795
(87) Internationale Veröffentlichungsnummer: WO 2018/028889

(56) Entgegenhaltungen:
- DE-A1-102008 046 881
- JP-A- 2012 110 223
- NL-A- 8 500 902

## Beschreibung

Die vorliegende Erfindung betrifft einen Kupplungseinschub mit einem schaltbaren Energiemodul und mit einer Verriegelung hierfür, wobei der Kupplungseinschub der Aufnahme mindestens eines Einschubs dient.

Kupplungseinschübe, welche auch als Adapterplatten bezeichnet werden, finden in elektrischen Schaltanlagen Verwendung, die in Einschubtechnik gebaut werden.

Schaltanlagen dienen der Verteilung elektrischer Energie sowie der Schaltung, Steuerung und Überwachung von ankommenden und abgehenden Leitungen, insbesondere bei Großverbrauchern. Hierzu können unterschiedliche Schaltgeräte in ein Schaltanlagengehäuse integriert und dort an Sammelschienen angeschlossen werden.

Bei Schaltanlagen in Einschubtechnik sind zumindest einzelne Felder der Schaltanlage mit einschiebbaren Modulen, im Folgenden auch als Einschübe bezeichnet, bestückbar. Im Falle eines Defekts kann so lediglich das betroffene Modul ausgetauscht werden, ohne dass die komplette Schaltanlage spannungsfrei geschaltet werden müsste. Dies ist insbesondere für industrielle Anwendungen von Bedeutung, da große Anlagen, welche über eine Schaltanlage betrieben werden, im Falle eines Defekts einer einzelnen Baugruppe nicht komplett abgeschaltet und wieder neu gestartet werden müssen. Einschubsysteme erlauben den Austausch der defekten Baugruppe auch unter Spannung. So können Störfälle ohne Betriebsunterbrechung schnell behoben werden.

Für bestimmte Anwendungen werden Einschübe auf Kupplungseinschüben angeordnet, die ihrerseits in die Schaltanlage einschiebbar und dort verschraubbar sind. Über ein ebenfalls auf dem Kupplungseinschub angeordnetes Energiemodul kann dabei der von den Sammelschienen eingehende Strom in die einzelnen Einschübe übertragen werden. In vielen Schaltanlagen wird zu diesem Zweck beispielsweise die Strommoduleinheit S der Firma IDS-Technology verbaut. Diese Strommoduleinheit weist ein Energiemodul auf, welches bis zu vier Einschübe speisen kann. Durch eine Betätigung des Energiemoduls können sowohl ein Hauptstromzugang und ein Hauptstromabgang als auch ein Steuerstrom geschaltet werden. Da das Energiemodul keine Schaltfunktion aufweist sondern manuell mittels eines Bedienschlüssels betätigt wird, besteht bei Schaltung des Energiemoduls die Gefahr des Zündens eines Störlichtbogens, sofern auch die Einschübe auf dem Kupplungseinschub eine Verbindung zum Stromnetz haben. Störlichtbögen können immer dann auftreten, wenn sich stromdurchflossene elektrische Kontakte zu langsam trennen oder schließen und es aufgrund des zu geringen Luftabstands zwischen den unter Spannung stehenden Bauteilen zu Spannungsüberschlägen kommt.

Störlichtbögen können explosionsartig enorme Kräfte freisetzen. Es entsteht eine Druckwelle und es treten extrem hohe Temperaturen auf. Damit stellen Störlichtbögen eine große Gefahr für Menschen und Anlagen dar. Um teure Anlagenausfälle, Brände und Personenschäden zu verhindern, ist es daher ein wichtiges Ziel beim Bau und Betrieb von Schaltanlagen, die Entstehung bzw. das unkontrollierte Ausbreiten von Störlichtbögen zu verhindern. Grundsätzlich wird dabei zwischen aktivem und passivem Störlichtbogenschutz unterschieden. Während der aktive Schutz sich darauf bezieht, dass ein bereits entstandener Störlichtbogen durch geeignete Maßnahmen auf den Entstehungsort begrenzt bleibt und benachbarte Funktionseinheiten und Räume einer Schaltanlage nicht beeinträchtigt, soll der passive Schutz die Entstehung eines Lichtbogens von Vorneherein verhindern beziehungsweise die Wahrscheinlichkeit der Entstehung eines Störlichtbogens reduzieren.

Die DE 10 2008 046 881 A1 offenbart in obigem Zusammenhang ein Modul für den Energieabgriff von Stromschienen in einem Schaltschrank, wobei das Modul eine Verriegelungseinheit und eine Einheit mit mehreren Kontaktschaltern aufweist. Die Verriegelungseinheit und die mehreren Kontaktschalter sind in einem Gehäuse oder auf einem Gehäuseträger angeordnet, und die Kontaktschalter sind mit der Verriegelungseinheit betätigbar.

Die Aufgabe liegt in der Bereitstellung eines Kupplungseinschubs mit einer Verriegelung, durch welchen auf konstruktiv einfache Weise ein besserer passiver Schutz gegenüber Störlichtbögen gegeben ist.

Diese Aufgabe wird gelöst durch einen Kupplungseinschub mit den Merkmalen des Patentanspruchs 1.

Weiterbildungen und Ausgestaltungen der Erfindung sind Gegenstand der Unteransprüche.

Die Erfindung besteht in einem Kupplungseinschub mit einem schaltbaren Energiemodul und mit einer Verriegelung hierfür, wobei der Kupplungseinschub der Aufnahme mindestens eines Einschubs dient, wobei die Verriegelung ein Führungselement und ein Verriegelungselement umfasst, wobei das Führungselement und das Verriegelungselement an dem Kupplungseinschub lösbar befestigt sind, wobei weiterhin das Führungselement eine erste Öffnung aufweist, durch welche ein Bedienschlüssel zur Betätigung des Energiemoduls hindurchführbar ist, und wobei das Verriegelungselement einen Sperrriegel aufweist, welcher in Einsatzlage der Verriegelung in die erste Öffnung des Führungselements eingreift und diese für die Hindurchführung des Bedienschlüssels sperrt, wobei das Verriegelungselement in Einsatzlage derart an dem Kupplungseinschub angeordnet ist, dass eine Freigabe der ersten Öffnung durch Entfernen des Verriegelungselements nur möglich ist, wenn sich in dem Kupplungseinschub kein Einschub befindet.

Mit anderen Worten sieht die Erfindung einen Kupplungseinschub vor, wobei die Verriegelung aus zwei Elementen besteht, und zwar einem Führungselement und einem Verriegelungselement besteht, welche beide an dem Kupplungseinschub lösbar befestigt sind. Das Führungselement weist eine erste Öffnung auf, durch welche ein Bedienschlüssel in Einsatzlage des Führungselements zur Betätigung des Energiemoduls hindurchführbar ist. Bei montiertem Führungselement ist das Energiemodul nur zu betätigen, wenn der Bedienschlüssel zunächst durch die erste Öffnung des Führungselements hindurchgeführt wird, welche in einer Flucht mit einer Bedienöffnung in dem Energiemodul angeordnet ist. Das Führungselement fungiert somit auch als Zielvorrichtung für das exakte Ansetzen des Bedienschlüssels.

Die erste Öffnung in dem Führungselement wird jedoch bei vollständig montierter Verriegelung durch einen an dem Verriegelungselement ausgebildeten Sperrriegel versperrt. Das Verriegelungselement ist in Einsatzlage bezüglich des Führungselements derart angeordnet, dass der Sperrriegel in die erste Öffnung an dem Führungselement eingreift und diese versperrt. In dieser Einsatzlage der Verriegelung kann somit der Bedienschlüssel nicht durch die erste Öffnung in dem Führungselement hindurchgeführt und in die Bedienöffnung in dem Energiemodul eingeführt werden, so dass eine Betätigung des Energiemoduls mit dem Bedienschlüssel nicht möglich ist. Ein Schalten des Energiemoduls und damit eine Gefahr des Entstehens von Störlichtbögen ist somit in Einsatzlage der Verriegelung nicht gegeben.

Ein Schalten des Energiemoduls mit Hilfe des Bedienschlüssels ist erst dann wieder möglich, wenn die erste Öffnung in dem Führungselement freigegeben ist. Hierzu ist der Sperrriegel aus der ersten Öffnung zu entfernen. Dies ist nur möglich, indem das Verriegelungselement als Ganzes von dem Kupplungseinschub entfernt wird. Da die Erfindung vorsieht, dass das Verriegelungselement nur entfernt werden kann, wenn sich in dem Kupplungseinschub kein Einschub befindet, sind zwingend sämtliche Einschübe aus dem Kupplungseinschub herauszunehmen, um das Verriegelungselement seinerseits zu entfernen und so die erste Öffnung in dem Führungselement für die Hindurchführung des Bedienschlüssels freizugeben.

Mit anderen Worten bewirkt die erfindungsgemäße Verriegelung und ihre spezielle Anordnung, dass ein Schaltvorgang an dem Energiemodul nur dann vorgenommen werden kann, wenn sämtliche Einschübe aus dem Kupplungseinschub entfernt sind. Das Zünden von Störlichtbögen zwischen den Kontakten des Energiemoduls und denen der Einschübe wird somit unterbunden und eine Schädigung der Schaltanlage und/oder des Bedienpersonals kann verhindert werden.

Das Verriegelungselement kann beispielsweise derart an dem Kupplungseinschub angeordnet sein, dass die Befestigungsmittel, mittels derer das Verriegelungselement in Einsatzlage an dem Kupplungseinschub befestigt ist, nur zugänglich sind, wenn die Einschübe zuvor aus dem Kupplungseinschub entfernt wurden. Insbesondere können die Befestigungsmittel, beispielsweise Schrauben, zwischen den Einschüben und dem Kupplungseinschub angeordnet sein.

Für eine Freigabe der Bedienöffnung an dem Energiemodul ist das Verriegelungselement vollständig von dem Kupplungseinschub zu entfernen, während das Führungselement mit der nun freigegebenen ersten Öffnung an dem Kupplungseinschub verbleibt. Durch die erste Öffnung kann sodann der Bedienschlüssel hindurch- und in die Bedienöffnung an dem Energiemodul eingeführt werden.

Gemäß einer Ausgestaltung der Erfindung weist das Führungselement zusätzlich zu der ersten Öffnung mindestens eine zweite Öffnung auf, welche fluchtend mit der ersten Öffnung angeordnet ist.

Bei fluchtender Anordnung mehrerer, mindestens zweier Öffnungen in dem Führungselement ist der Bedienschlüssel durch sämtliche Öffnungen in dem Führungselement hindurchzuführen, bevor er in die Bedienöffnung an dem Energiemodul eingeführt werden kann. Dies ist insbesondere dann vorteilhaft, wenn der Abstand zwischen der ersten Öffnung und der Bedienöffnung konstruktionsbedingt so groß ist, dass ein entsprechend bemessener Bedienschlüssel zwischen der ersten Öffnung und der Bedienöffnung eingeführt werden könnte und so trotz eingebauter Verriegelung ein Schaltvorgang an dem Energiemodul vorgenommen werden könnte. Das Vorsehen mehrerer Öffnungen in dem Führungselement, mindestens einer ersten und einer zweiten Öffnung, durch welche der Bedienschlüssel hindurchzuführen ist, um einen Schaltvorgang an dem Energiemodul auszuführen, erhöht somit den Schutz gegenüber unerwünschten Schaltvorgängen an dem Energiemodul.

Die Abstände zwischen den einzelnen Öffnungen sowie der Bedienöffnung an dem Energiemodul sind dabei stets so vorzusehen, dass ein Bedienschlüssel mit gegebenen Abmessungen nicht derart in die Zwischenräume zwischen den Öffnungen eingebracht werden kann, dass eine Betätigung des Energiemoduls bei vollständig montierter Verriegelung unter Umgehung der ersten Öffnung möglich wäre.

Zusätzlich dienen mehrere fluchtend angeordnete Öffnungen nach Art einer Zielvorrichtung dem korrekten Ansetzen des Bedienschlüssels.

Bei einer Ausführung der Erfindung sind das Führungselement und das Verriegelungselement aus einem Metall gefertigt, beispielsweise aus einem Stahl. Ein derartiges Metall verleiht dem Führungs- und dem Verriegelungselement die nötige Steifigkeit und Langlebigkeit. Ein Umgehen oder Außerkraftsetzen der Verriegelung, beispielsweise durch Brechen oder Verbiegen des Führungs- und/oder Verriegelungselements, wird so erschwert. Es können jedoch auch beliebige andere geeignete Werkstoffe, wie beispielsweise Kunststoffe oder Werkstoffe auf Basis von Kohlefasern zum Einsatz kommen.

Das Führungselement und das Verriegelungselement können dabei als streifenförmige Bleche ausgeführt sein, wobei jeweils einzelne Abschnitte der Bleche abgewinkelt ausgebildet sein können. Insbesondere können Abschnitte des Führungselements, auf welchen die ersten und zweiten Öffnungen angeordnet sind, parallel zueinander und senkrecht zu einem Auflagebereich des Führungselements auf dem Kupplungseinschub angeordnet sein.

Es kann vorgesehen sein, dass das Führungselement und das Verriegelungselement Ausnehmungen für die Durchführung von Befestigungsmitteln aufweisen. Hierbei kann es sich beispielsweise um Löcher für die Durchführung von Schrauben handeln, mittels derer das Führungselement und das Verriegelungselement an dem Kupplungseinschub festschraubbar sind. Zweckmäßigerweise weisen sowohl das Führungselement als auch das Verriegelungselement mehrere, über ihre Länge verteilte derartige Ausnehmungen auf, so dass ein fester Sitz der Verriegelung an dem Kupplungseinschub gewährleistet ist.

Das Führungselement kann dabei an mindestens einem weiteren mit dem Kupplungseinschub verbundenen Bauteil befestigbar sein, insbesondere dann, wenn das Führungselement konstruktionsbedingt nur in einem begrenzten Bereich auf dem Kupplungseinschub aufliegt und an diesem befestigbar ist.

Im Folgenden wird die Erfindung anhand eines Ausführungsbeispiels und unter Bezugnahme auf die beigefügten Zeichnungen näher erläutert.

Es zeigen:
- Figur 1:: Ein mit Einschüben und einem Energiemodul bestückter Kupplungseinschub ohne Verriegelung;
- Figur 2:: Eine Ausführungsform der erfindungsgemäßen Verriegelung;
- Figur 3:: Der Kupplungseinschub aus Figur 1, jedoch mit entfernten Einschüben und mit montierter Verriegelung;
- Figur 4:: Der Kupplungseinschub aus Figur 1 mit montierter Verriegelung.

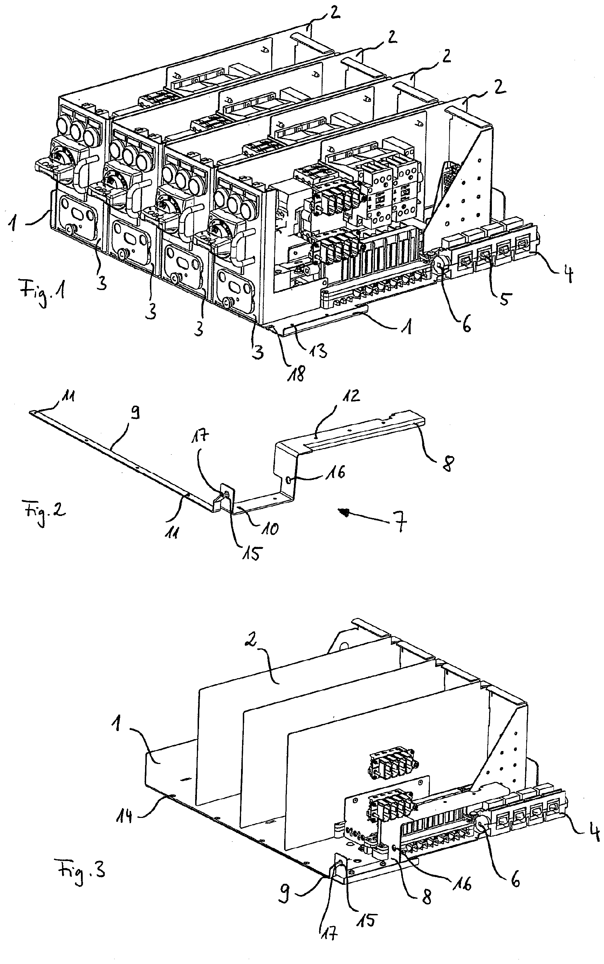

In Figur 1 ist ein Kupplungseinschub 1 dargestellt, auf dem zwischen Trennwänden 2 vier gleichartige Einschübe 3 angeordnet sind. Der Kupplungseinschub 1 ist geeignet, in eine Schaltanlagenanordnung integriert zu werden. Weiter ist auf dem Kupplungseinschub 1 ein Energiemodul 4 angeordnet, welches den von hier nicht dargestellten Sammelschienen eingehenden Strom in die einzelnen Einschübe 3 überträgt. Das Energiemodul 4 speist dabei alle vier Einschübe 3. Innerhalb der einzelnen Einschübe 3 wird der Strom durch unterschiedliche, hier nicht näher erläuterte Komponenten geführt und gesteuert, bevor er jeweils über einen Abgangsstecker zu einem Verbraucher geführt wird.

Das Energiemodul 4 weist Kontaktbolzen 5 auf, über welche die Kontakte der Einschübe 3 kontaktiert werden können. Das Überführen des Energiemoduls 4 von einem Betriebszustand in einen anderen Betriebszustand, beispielsweise das Überführen aus einer Trennstellung in eine Stellung, in der die Kontaktbolzen 5 die mit den Einschüben 3 verbundenen Kontakte kontaktieren oder umgekehrt, ist mittels eines in den Figuren nicht dargestellten Bedienschlüssels möglich. Dieser wird in eine Bedienöffnung 6 an dem Energiemodul 4 eingeführt und durch manuelles Drehen des Bedienschlüssels wird das Energiemodul 4 geschaltet.

Bei einem solchen manuellen Schaltvorgang besteht die Gefahr der Ausbildung eines Störlichtbogens, sofern sowohl die Einschübe 3 als auch das Energiemodul 6 eine Verbindung zum Stromnetz haben. Ein solcher Störlichtbogen kann große Teile der Schaltanlage, insbesondere die Einschübe 3, beschädigen und stellt zudem eine Gefahr für das die Anlage bedienende Personal dar.

Um die Ausbildung eines Störlichtbogens zu verhindern wird eine Verriegelung 7 in die Anordnung aus Figur 1 integriert. Die Verriegelung 7 ist in Figur 2 dargestellt und umfasst ein Führungselement 8 und ein Verriegelungselement 9, welche beide als metallenes Blech ausgeführt sind. Sowohl das Verriegelungselement 9 als auch das Führungselement 8 weisen eine streifenförmige Gestalt auf, wobei das Führungselement 8 mehrfach abgewinkelt ist. Das Verriegelungselement 9 ist an seinem einen Ende abgewinkelt, wobei das abgewinkelte Ende des Verriegelungselements 9 einen Sperrriegel 17 bildet, was im Folgenden noch näher erläutert werden wird. Sowohl das Führungselement 8 als auch das Verriegelungselement 9 sind an dem Kupplungseinschub 1 befestigbar.

Hierzu weist das Führungselement 8 Ausnehmungen 10 auf, welche in Einsatzlage der Verriegelung 7 mit korrespondierenden Ausnehmungen 13 in dem Kupplungseinschub 1 fluchten und durch welche Schrauben hindurchführbar sind, die mit Muttern festlegbar sind. Das Verriegelungselement 9 weist entsprechend Ausnehmungen 11 auf, welche in Einsatzlage der Verriegelung 7 mit korrespondierenden Ausnehmungen 14 in dem Kupplungseinschub 1 fluchten und durch welche Schrauben hindurchführbar sind, die mit Muttern festlegbar sind. Das Führungselement weist darüber hinaus Ausnehmungen 12 auf, durch welche ebenfalls Schrauben hindurchführbar sind, mit Hilfe derer das Führungselement 8 an einem weiteren mit dem Kupplungseinschub 1 verbundenen Bauteil befestigbar ist. Die Ausnehmungen 12 sind alternativ auch geeignet, Kabelführungselemente oder andere Hilfsmittel aufzunehmen.

In Figur 3 ist der Zustand dargestellt, in dem die Verriegelung 7 mit dem Führungselement 8 und dem Verriegelungselement 9 an dem Kupplungseinschub 1 befestigt ist. In dieser Einsatzlage der Verriegelung 7 ist das Führungselement 8 auf dem Kupplungseinschub 1 mittels durch die Ausnehmungen 10 und 13 hindurchgeführter und mit Muttern festgelegter Schrauben befestigt, während das Verriegelungselement 9 im Wesentlichen unterhalb des Kupplungseinschubs 1 angeordnet ist und mit durch die Ausnehmungen 11 und 14 hindurchgreifenden Schrauben und entsprechenden Muttern befestigt ist. Grundsätzlich sind zur Befestigung des Führungselements 8 auch andere geeignete Befestigungsmittel denkbar, wie beispielsweise Nieten oder eine Befestigung mittels Punktschweißen. Ebenso kann das Verriegelungselement 9 mittels anderer geeigneter, lösbarer Befestigungsmittel an dem Kupplungseinschub 1 befestigt sein.

Der Kupplungseinschub 1 weist einen Schlitz 18 auf, siehe Figur 1, durch welchen der an dem Verriegelungselement 9 ausgebildeter Sperrriegel 17 in Einsatzlage der Verriegelung 7 nach oben hindurchgeführt wird.

Das Führungselement 8 weist eine erste Öffnung 15 sowie eine zweite Öffnung 16 auf, durch welche ein Bedienschlüssel zur Betätigung des Energiemoduls 4 hindurchführbar ist. Der Bedienschlüssel ist in seinen Abmessungen so bemessen, dass der einzig mögliche Zugang zu der Bedienöffnung 6 des Energiemoduls 4 durch die beiden Öffnungen 15 und 16 führt. Dies ist besser aus Figur 3 ersichtlich, welche den Kupplungseinschub 1 zeigt, jedoch mit entfernten Einschüben 3 und mit montierter Verriegelung 7. Hier ist zu erkennen, dass die Öffnungen 15 und 16 in dem Führungselement 8 mit der Bedienöffnung 6 in dem Energiemodul 4 fluchten. Der hier nicht dargestellte Bedienschlüssel kann in die Bedienöffnung 6 nur eingeführt werden, wenn er zuvor durch die Öffnungen 15 und 16 hindurchgeführt wurde. Das Führungselement 8 hat somit auch die Funktion einer Zielvorrichtung.

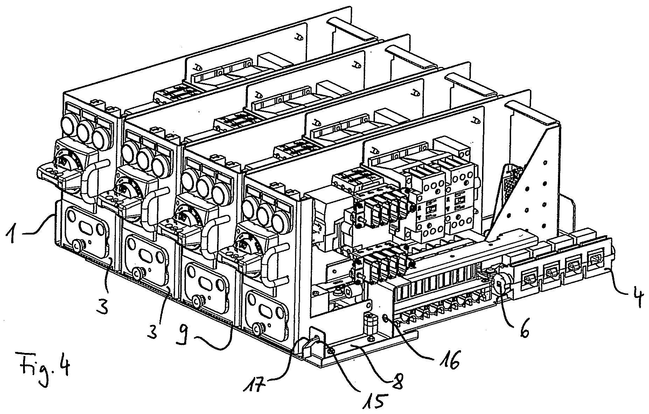

In Einsatzlage der Verriegelung 7, so wie sie in den Figuren 3 und 4 dargestellt ist, greift der an dem Verriegelungselement 9 ausgebildete Sperrriegel 17 in die erste Öffnung 15 des Führungselements 8 ein und sperrt diese für die Hindurchführung des Bedienschlüssels des Energiemoduls. Bei solchermaßen montierter Verriegelung 7 ist somit der Zugang zu der Bedienöffnung 6 für den Bedienschlüssel versperrt. Da die Verriegelung 7 in ihren Abmessungen an die Abmessungen des Bedienschlüssels angepasst ist, kann der Bedienschlüssel auch nicht schräg angesetzt oder lediglich durch die Öffnung 16 hindurchgeführt werden. Der einzige Zugang des Bedienschlüssels zu der Bedienöffnung 6 führt durch die beiden Öffnungen 15 und 16 und dieser Zugang ist versperrt, sobald der Sperrriegel 17 in die Öffnung 15 eingreift. Eine Betätigung des Energiemoduls 4 ist in diesem Zustand nicht möglich.

In Figur 4 ist der Kupplungseinschub 1 mit montierter Verriegelung 7 und wieder eingeschobenen Einschüben 3 gezeigt. Die Schrauben, mittels derer das Verriegelungselement 9 an dem Kupplungseinschub 1 befestigt ist, sind nun durch die Einschübe 3 verdeckt und daher in diesem Zustand nicht zugänglich, insbesondere nicht lösbar. Um ausgehend von dem in Figur 4 gezeigten Zustand eine Betätigung des Energiemoduls 4 zu ermöglichen, muss die Öffnung 15 für die Einführung des Bedienschlüssels freigegeben werden. Der Sperrriegel 17 kann aus der Öffnung 15 nur entfernt werden, indem das Verriegelungselement 9 vollständig von dem Kupplungseinschub 1 entfernt wird. Hierzu müssen zunächst die Einschübe 3 aus dem Kupplungseinschub 1 herausgezogen werden, so dass sich ein Zustand wie in Figur 3 dargestellt ergibt. Nun kann durch Lösen der entsprechenden Schrauben das Verriegelungselement 9 von dem Kupplungseinschub 1 gelöst und der Sperrriegel 17 aus der Öffnung 15 herausgeführt werden. Die Öffnung 15 ist damit freigegeben für die Einführung des Bedienschlüssels. In diesem Zustand kann der Bedienschlüssel durch die Öffnungen 15 und 16 hindurch- und in die Bedienöffnung 6 an dem Energiemodul 4 eingeführt werden und das Energiemodul 4 kann geschaltet werden. Da die Einschübe 3 aus dem Kupplungseinschub 1 entfernt sind, kann sich bei dem Schaltvorgang kein Lichtbogen zwischen den Kontakten des Energiemoduls 4 und denen der Einschübe 3 ausbilden.

Mit anderen Worten ist das Energiemodul 4 unter Verwendung der erfindungsgemäßen Verriegelung 7 nur dann mittels des Bedienschlüssels schaltbar, wenn sämtliche Einschübe 3 aus dem Kupplungseinschub 1 entfernt sind. Die Verriegelung 7 bietet hier somit einen wirksamen Schutz gegenüber der Entstehung von Störlichtbögen.

## Patentansprüche

1. Kupplungseinschub (1) mit einem schaltbaren Energiemodul (4) und mit einer Verriegelung (7) hierfür, wobei der Kupplungseinschub (1) der Aufnahme mindestens eines Einschubs (3) dient und wobei das Energiemodul (4) zur Übertragung eines von Sammelschienen eingehenden Stroms in die einzelnen Einschübe (3) dient, wobei die Verriegelung (7) ein Führungselement (8) und ein Verriegelungselement (9) umfasst, wobei das Führungselement (8) an dem Kupplungseinschub (1) lösbar befestigt ist, wobei weiterhin das Führungselement (8) eine erste Öffnung (15) aufweist, durch welche ein Bedienschlüssel zum Schalten des Energiemoduls (4) hindurchführbar ist, und wobei das Verriegelungselement (9) einen Sperrriegel (17) aufweist, welcher in Einsatzlage der Verriegelung (7) in die erste Öffnung (15) des Führungselements (8) eingreift und diese für die Hindurchführung des Bedienschlüssels sperrt,
**dadurch gekennzeichnet, dass**
das Verriegelungselement (9) an dem Kupplungseinschub (1) lösbar befestigt ist und das Verriegelungselement (9) in Einsatzlage derart an dem Kupplungseinschub (1) angeordnet ist, dass eine Freigabe der ersten Öffnung (15) durch Entfernen des Verriegelungselements (9) nur möglich ist, wenn sich in dem Kupplungseinschub (1) kein Einschub (3) befindet.

2. Kupplungseinschub (1) nach Anspruch 1, wobei das Führungselement (8) zusätzlich zu der ersten Öffnung (15) mindestens eine zweite Öffnung (16) aufweist, welche fluchtend mit der ersten Öffnung (15) angeordnet ist.

3. Kupplungseinschub (1) nach Anspruch 1 oder 2, wobei das Führungselement (8) und das Verriegelungselement (9) aus einem Metall gefertigt sind.

4. Kupplungseinschub (1) nach einem der Ansprüche 1 bis 3, wobei das Führungselement (8) und das Verriegelungselement (9) als Bleche ausgeführt sind.

5. Kupplungseinschub (1) nach einem der Ansprüche 1 bis 4, wobei das Führungselement (8) und das Verriegelungselement (9) Ausnehmungen (10, 11, 12) für die Durchführung von Befestigungsmitteln aufweisen.

6. Kupplungseinschub (1) nach einem der Ansprüche 1 bis 5, wobei das Führungselement (8) an mindestens einem weiteren mit dem Kupplungseinschub (1) verbundenen Bauteil befestigbar ist.

## Claims

1. Coupling plug-in unit (1) having a switchable energy module (4) and having a locking mechanism (7) for said energy module, wherein the coupling plug-in unit (1) serves to accommodate at least one plug-in unit (3) and wherein the energy module (4) serves to transmit a current entering from busbars into the individual plug-in units (3), wherein the locking mechanism (7) comprises a guide element (8) and a locking element (9), wherein the guide element (8) can be detachably fastened to the coupling plug-in unit (1), wherein the guide element (8) additionally has a first opening (15) through which an operating key can be inserted to switch the energy module (4), and wherein the locking element (9) has a blocking bar (17) which engages into the first opening (15) of the guide element (8) when the locking mechanism (7) is in the position of use, blocking the insertion of the operating key through the same,
**characterised in that**
the locking element (9) is detachably fastened to the coupling plug-in unit (1) and the locking element (9), when in the position of use, is arranged on the coupling plug-in unit (1) in such a manner that the first opening (15) can only be made clear by removal of the locking element (9) if there is no plug-in unit (3) in the coupling plug-in unit (1).

2. Coupling plug-in unit (1) according to claim 1, wherein the guide element (8) has, in addition to the first opening (15), at least one second opening (16) arranged in alignment with the first opening (15).

3. Coupling plug-in unit (1) according to claim 1 or 2, wherein the guide element (8) and the locking element (9) are made of a metal.

4. Coupling plug-in unit (1) according to any of claims 1 to 3, wherein the guide element (8) and the locking element (9) are designed as sheet metal parts.

5. Coupling plug-in unit (1) according to any of claims 1 to 4, wherein the guide element (8) and the locking element (9) have recesses (10, 11, 12) through which fastening means can pass.

6. Coupling plug-in unit (1) according to any of claims 1 to 5, wherein the guide element (8) can be fastened to at least one further component connected to the coupling plug-in unit (1).

## Revendications

1. Tiroir de couplage (1) comprenant un module d'énergie commutable (4) et un verrouillage (7) destiné à ce dernier, dans lequel le tiroir de couplage (1) permet de recevoir au moins un tiroir (3) et le module d'énergie (4) permet la transmission d'un courant provenant de barres omnibus dans les différents tiroirs (3), dans lequel le verrouillage (7) comprend un élément de guidage (8) et un élément de verrouillage (9), dans lequel l'élément de guidage (8) est fixé de manière amovible au niveau du tiroir de couplage (1), dans lequel en outre l'élément de guidage (8) comporte une première ouverture (15) à travers laquelle peut être introduite une clé de commande pour actionner le module d'énergie (4), et dans lequel l'élément de verrouillage (9) comprend un verrou de sûreté (17) qui, dans la position de mise en œuvre du verrouillage (7), s'engage dans la première ouverture (15) de l'élément de guidage (8) et bloque celui-ci pour l'introduction de la clé de commande,
**caractérisé en ce que**
l'élément de verrouillage (9) est fixé de manière amovible au niveau du tiroir de couplage (1) et l'élément de verrouillage (9) est disposé dans la position de mise en œuvre au niveau du tiroir de couplage (1) de manière qu'une libération de la première ouverture (15) est possible par retrait de l'élément de verrouillage (9) uniquement si aucun tiroir (3) ne se trouve dans le tiroir de couplage (1).

2. Tiroir de couplage (1) selon la revendication 1, dans lequel l'élément de guidage (8) comprend en plus de la première ouverture (15) au moins une seconde ouverture (16) qui est placée dans l'alignement de la première ouverture (15).

3. Tiroir de couplage (1) selon la revendication 1 ou 2, dans lequel l'élément de guidage (8) et l'élément de verrouillage (9) sont en métal.

4. Tiroir de couplage (1) selon l'une quelconque des revendications 1 à 3, dans lequel l'élément de guidage (8) et l'élément de verrouillage (9) sont réalisés sous la forme de pièces en tôle.

5. Tiroir de couplage (1) selon l'une quelconque des revendications 1 à 4, dans lequel l'élément de guidage (8) et l'élément de verrouillage (9) comportent des évidements (10, 11, 12) pour le passage des moyens de fixation.

6. Tiroir de couplage (1) selon l'une quelconque des revendications 1 à 5, dans lequel l'élément de guidage (8) peut être fixé sur au moins un autre composant connecté au tiroir de couplage (1).
